Europäisches Patentamt

European Patent Office

Office européen des brevets

(19)

(11) EP 1 221 563 A1

(12) EUROPEAN PATENT APPLICATION

(43) Date of publication:
10.07.2002 Bulletin 2002/28

(51) Int Cl.7: F16G 5/16

(21) Application number: 00204819.7

(22) Date of filing: 28.12.2000

(84) Designated Contracting States:
AT BE CH CY DE DK ES FI FR GB GR IE IT LI LU
MC NL PT SE TR
Designated Extension States:
AL LT LV MK RO SI

(71) Applicant: Van Doorne's Transmissie B.V.
5000 AM Tilburg (NL)

(72) Inventor: Brandsma, Arjen
5045 WN Tilburg (NL)

(54) **Transmission belt comprising transverse elements and an endless carrier**

(57)     A transmission belt (4) for a continuously variable transmission (1), comprising transverse elements (5) and an endless carrier (6), the elements (5) being arranged freely slideable along said carrier (6) and comprising a tapered radially inner element part (13), a radially outer element part (14) having a front principle face (8) with a notch-like protrusion (9) provided thereon and having a back principle face (11) with a hole-like recess (10) provided therein, and a rocking edge (12) forming a transition between the said principle faces (8 and 11), such that adjacent elements (5, 51; 5, 52) may mutually rotate about a contract line (16) on the rocking edge (12). According to the invention and at least in a belt part that is the most tightly bent in a longitudinal direction (LD) of the belt (4) the protrusion has a protruding height ($H_N$) that is notionally smaller than a longitudinal separation between the front principle face (8) of a succeeding element (5; 51) and the back principle face (11) of a preceding element (5, 52) at the position of the notch (9).

FIG. 6

EP 1 221 563 A1

## Description

The present invention relates to a transmission belt comprising transverse elements supported by an endless carrier according to the preamble of claim 1. Such a transmission belt is generally known, e.g. from its application in a continuously variable transmission for motor vehicles. Moreover, this type of belt is described in a number of patent publications such as EP-A 0377918. In the known belt the transverse elements are relatively thin metal plates provided with a front principle face and a back principle face. During operation the belt is wound around a drive pulley and a driven pulley, whereby torque may be transmitted between the pulleys by means of the drive pulley exerting a tangentially oriented friction force on side faces of the elements propelling it forward and the elements mutually exerting a pushing force that is exerted by the front principle face of a succeeding element contacting the back principle face of a preceding element. The endless carrier thereby supports and guides the transverse elements.

The known elements shows at least three parts, being a radially outer part, or head part, where the thickness of the element is largest, a radially inner part, or recessed part, where the thickness of the element is smallest and an in between part, or rocking edge, that forms a transition between the head part and the recessed part. This construction allows mutually contacting elements to tilt about an axially oriented contact line on the rocking edge, so that the transmission belt may pass along a trajectory that is curved in the longitudinal direction of the belt, such as on the pulleys. In practice the rocking edge is more or less smoothly curved for keeping the Herzian contact stress, which results from the said pushing force building up in the curved trajectory, within acceptable limits.

With a continuously variable transmission provided with the known belt, torque may advantageously be transferred by means of the pushing force. Although significant advantages are inherently connected with such a construction, it is generally considered a prerequisite that the belt element is to be provided with a notch protruding from its front principle face in a longitudinal direction of the transmission belt and with a hole on its back principle face, such that during operation a mutual orientation between adjacent transverse elements is more or less maintained by the notch of the succeeding element protruding in the associated hole of a preceding element, even when the belt passes along a longitudinally curved trajectory. In practical embodiments of the transmission belt, the notch is provided at least partly in the radially outer element part.

In the known belt design the notch, in particular its relatively large protruding height and bulkiness, complicates the production process of the belt, in particular at blanking the element. Possible locations of the notch on the front principle face of the element are limited due to the requirement of sufficient mechanical strength both in manufacturing, e.g. at blanking, and during operation. Accordingly, the notch needs to be located at a critical minimum distance from edges of the element, which distance increases with an increasing protruding height of the notch. Moreover, the height of the notch also determines a depth of the hole and consequently restricts the possible reduction in thickness of the element that is principally desired for minimising the emanation of noise during operation of the belt. Accordingly, a freedom in designing the elements is severely limited. In the known art the shape of the combination of notch and hole is determined by the requirement that the notch interacts with the hole during operation. A lower boundary for the notch height is then determined by the longitudinal separation between two adjacent elements at a radial location of the notch when the transmission belt passes along a trajectory that is the most tightly bent in the longitudinal direction during operation. In equation this requirement may be approximated by:

$$H_N > L_{MAX} \cdot \tan(\alpha_{MAX})$$

where:

$H_N$ is a lower boundary for the protruding height of the notch;
$L_{MAX}$ is the radial distance between the contact line of the elements and an radially outer edge of the notch and;
$\alpha_{MAX}$ is the angle at which two adjacent elements are orientated in the most tightly bent belt trajectory;

Typical values for $L_{MAX}$ and $\alpha_{MAX}$ are 7 mm and 5 degrees respectively, in which case $H_N$ should be larger than approximately 0.6 mm. Typically, however, the notch height is increased somewhat (e.g. by 0.4 mm to 1 mm in the above-mentioned typical example) to ensure a minimum overlap between the notch and the hole at all times during operation, such that they do not interact at an edge part of the hole realising a more favourable contact pressure there between. The depth of the hole is determined by the notch height such that the notch can be completely inserted in the hole when the transmission belt passes along a longitudinally straight trajectory and should therefore be slightly larger than the notch height.

The invention aims at providing an increased freedom in designing the elements, such that its dimensions may be reduced, by providing means that obviate the need for, or at least reduce the dimensions of the combination of the notch and the hole. Such reduced dimensions are highly desirable, since they allow a considerable weight reduction of the transmission belt, thereby improving its efficiency and/or the maximum amount of torque that may be transmitted between the said pulleys. Moreover, the amount of noise generated by the belt during may be significantly reduced.

According to the invention such aim may be achieved with the transmission belt according to claim 1. The invention is based on the insight that at least in the bent trajectory on the pulley the notch and hole combination has the function to counteract tilting of the element under the influence of a force moment acting on the element as a result of a difference between the effective radial position of the application of the said friction force between the pulley and the element and that of a resultant force resulting from the pushing forces between the element and the preceding element and between the element and the succeeding element, as is e. g. described in the Japanese patent application no. 2000-213609. According to the insight underlying the present invention, such tilting may be prevented by reducing the difference between the said effective radial positions, e.g. by increasing the radial position of the side faces with respect to the rocking edge or by radially lowering the position of the rocking edge with respect to the side faces, alternatively such tilting may also be prevented by increasing the overall radial length of the side faces of the element or by increasing the friction between element and pulley, which latter option may for instance be influenced by the type of lubricant, by increasing a roughness of the contacting faces of the element and the pulleys, or by the type of profile on such contacting faces. In this respect, a pattern of grooves and ridges stretching in the radial direction may be advantageously adopted.

In the construction according to the invention the notch need not necessarily overlap with the hole in the bent trajectory during operation, since the above-discussed function thereof is not required. In such first embodiment of the invention the height of the notch is smaller than what is previously required, such that at least in the most tightly bent state of the belt there will normally be no interaction between the notch and the hole. In this manner not only the design freedom of the element is improved, but also the load on the notch and hole combination is reduced preventing excessive wear and possibly even element failure. Usually such load will be the largest in the said most tightly bent state of the transmission belt, because this state is associated with the drive pulley at acceleration from standstill. In this state the least number of elements are available on the drive pulley for taking up forces exerted by the pulley that are usually the largest during acceleration.

In a second embodiment of the invention the notch height is determined such that only in the straight trajectory of the belt in between he pulley the notch and hole may interact. The height of the notch then being such that in the least tightly bent state that occurs during operation of the belt there will normally be no interaction between the notch and the hole. This embodiment has the advantage the design of the notch and hole combination may be optimised exclusively for its function in the straight trajectory in between the pulleys. In this trajectory the notch hole combination serve to mutually align the elements to prevent them from moving or vibrating transversely and to account for some axial misalignment of the pulleys, causing the straight trajectory in between the pulleys to be slightly inclined with respect to the belt. The phenomenon of misalignment is relatively well known and is for instance discussed in EP-A 0976949. According to the invention, the hole may in such case favourably be a slot having a substantially rectangular longitudinal cross section with a long axis that is oriented in the radial direction of the belt and that is considerably longer than a radial dimension of the associated notch. In combination with a slot-shaped hole, the notch may have a longitudinal cross section that is also substantially rectangular such that a mutual lateral displacement of two adjacent elements is confined, thereby aiding in a controlled crossing of the straight trajectory. Alternatively, the notch may be provided with a more or less rounded shape, e.g. oval or circular, such that a mutual rotation of the elements about the longitudinal direction of the belt is enabled at least to a certain extend, whereas the lateral displacement still is confined. This further supports the said controlled crossing because the lateral element displacement may be increasingly confined without the risk of excessive contact pressures between the notch and the hole.

It is noted that when the controlled crossing of the element of the straight trajectory part is realised by other means than the notch and hole combination, such as e.g. an controlled interaction between the endless carrier and the elements as is disclosed in EP-A 09776949, the notch may be favourably omitted altogether. Accordingly, in a third embodiment of the invention, the belt is provided with an essentially flat front principle face at the radially outer element part and with means for aligning the elements in the straight trajectory part of the belt for realising a controlled crossing thereof.

In a further development of the invention, it is opted for essentially cancelling out the moment between the friction force and the resultant pushing force, by reducing the distance between the radial points of application thereof. In this respect it is remarked that also a friction force between the endless carrier and the element may have a significant influence on the said moment and should be taken into account when determining a desired point of application of the resultant pushing force for cancelling out the said force moment. In the known belt having an endless carrier comprising two sets of radially nested thin metal rings each inserted into a predominantly transversely oriented recess of the element, such cancelling out would mean that the said contact line on the rocking edge should be positioned approximately in between halfway and three quarters of the radial dimension of the side faces of the element, or at least at a considerable distance radially below the endless carrier. It is, however, known from geometrical analysis that in this case a longitudinal speed of the elements with respect to the endless carrier may become quite large, increasing friction losses there between which is generally considered disadvantageously, as is e.g. disclosed in the Japanese patent application no. 1-098733. The invention, unexpectedly and advantageously provides a solution to this problem in combining the relatively small notch height according to the invention with a rocking edge showing a curvature in the radial direction having a relatively large radius with respect to the usually applied radius between 6 to 12 mm, such that a radial position of the said contact line and thus the radial points of application of the resultant pushing force displaces radially inward along the rocking edge in dependence on the angle $\alpha$ at which two adjacent elements are positioned. According to the invention in this manner an optimum solution may be provided in that when the belt is the most tightly bent state, i.e. at $\alpha_{MAX}$, where the forces on the element are usually the largest, the said force moment is made small, whereas in less bent states the contact line moves radially outward on the rocking edge in the direction of the carrier. An added advantage of this embodiment is that a ratio coverage of the transmission provided with the belt according to the invention, i.e. a range of torque transmission ratios that may be achieved, is advantageously increased with respect to a belt having a rocking edge curvature with a known radius.

For the presently preferred belt designs having a belt or element transverse width between 20 mm and 40 mm, a belt or element radial height between 10 mm and 20 mm and an element thickness between 1 and 2.5 mm, the rocking edge curvature may favourably have a curvature in the range from 20 mm to 120 mm. In these designs to realise sufficient stability in the straight trajectory, it is considered advisable by the invention to design the element with at distance of least 5 mm between the rocking edge and the edge of the outer element part. A radius of curvature in the range between 35 mm to 70 mm may then be found suitable. In particular a value of about 40 mm is found to be particularly suitable for optimising both belt stability in the bent and the straight trajectories and belt efficiency at least in presently favoured belt designs.

In a preferred embodiment of the invention the curvature of the rocking edge is shaped substantially ellipsoidal, whereby the radius of curvature of the rocking edge increases in a radially inward direction, such that the contact line displaces radially at an increasing rate in dependence on the amount of bending in the longitudinal direction. This further improves the mechanical vibration stability of the belt and again aids in minimising the relative speed between the elements and the carrier, alternatively in maintaining good transmission efficiency. With the combination of measures a well performing transmission belt is achieved which may be produced in a favourable manner and which allows for larger freedom in design of the belt.

Now the transmission belt provided according to the invention and in particular its transverse elements will be elucidated further, with reference to the appended drawings. In the drawings:

Figure 1 is a diagrammatic elevation in section of a transmission belt as fitted around two pulleys as part of a well known continuously variable transmission;
Figure 2 is an embodiment of a transverse element according to the known art;
Figure 3 is side elevation view of elements according to the known art;
Figure 4 is a side elevation view of an embodiment of a transverse element according to the invention;
Figure 5 is a front view of element embodiment favourably taking advantage of the design freedom that arises from a smaller notch height.
Figure 6 is a side elevation view of another embodiment of an element according to the invention;
Figure 7 is side elevation view of an element having a notch shaped in accordance with an embodiment of the invention;
Figure 8 is side elevation view of an element having a notch shaped in accordance with another embodiment of the invention;

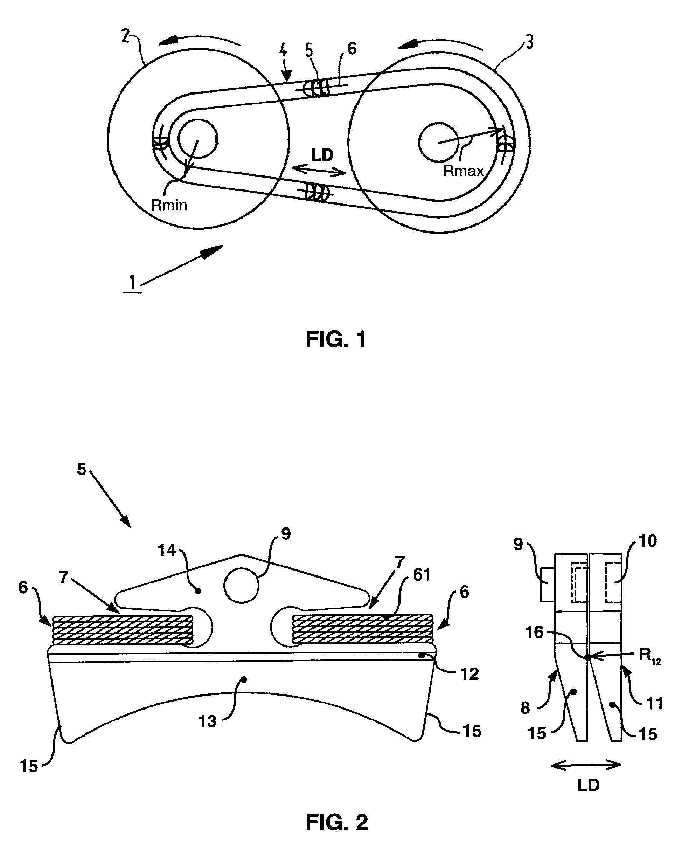

Figure 1 shows a schematic view of a continuously variable transmission 1, which is well known in the art, in axial cross section, at least of the transmission belt 4 and pulleys 2 and 3 as a part thereof. The transmission 1 comprises a first or drive pulley 2 to be drivingly connected to a prime mover such as a vehicle combustion engine and a second or driven pulley 3 to be drivingly connected to a load such as a vehicle drive shaft. A transmission belt 4 is located between a conical sheave pair of each pulley 2, 3 and drivingly connecting the pulleys 2 and 3. Between the sheaves of each sheave pair a part of the belt is in a bent trajectory, whereas in between the pulleys 2, 3 it crosses in a more or less straight trajectory. The radii of curvature of the bent trajectory parts are controlled in a mutually co-ordinated manner in order to realise a wanted transmission ratio between the said pulleys 2, 3, which control is generally known in the relevant art and will not be discussed further. The said radii can assume any value between a maximum radius of curvature of the bent trajectory part $R_{MAX}$ and a minimum radius of curvature of the bent trajectory part $R_{MIN}$. The transmission belt 4 is schematically shown to comprise a carrier 6 and a number of transverse elements 5 that during operation may be clamped between and in arrive friction contact with the sheaves of the drive pulley 2 and of the driven pulley 3 respectively, enabling torque transmission there between. In the transmission condition shown in figure 1 with drive pulley 2 being driven by an engine, the transmission belt 3 transmits mechanical power to the driven pulley 3 while reducing the rotational speed of the load with respect to that of the engine. Such transmission condition is usually denoted Low transmission ratio.

In figure 2 an embodiment of the transverse element 5 according to the known art is provided as seen in the longitudinal direction LD of the transmission belt 4 and in a side elevation thereof. It is shown that the carrier 6 is composed of two sets of radially nested thin metal rings 61, each set inserted into a predominantly transversely oriented recess 7 of the element 5. The elements 5 are provided with a notch 9 protruding from a front principle face 8 thereof, for interaction with a hole 10 provided in a back principle face 11 thereof and indicated by the dashed lines, so as to mutually align and/or position two adjacent transverse elements 5. It is further indicated that there is provided a rocking edge 12 on the front principle face 8 forming a curved transition of radius $R_{12}$ between a radially inner part 13 and a radially outer part 14 of the of the element 5. The radially inner part 13 is recessed in the longitudinal direction LD of the belt 4 with respect to e.g. the rocking edge 12 as seen in side elevation. The rocking edge 12 and the recessed inner part 13 allow mutual tilting of the transverse elements 5 about a generally axially oriented contact line 16 on the rocking edge 12 so that the belt 4 or a part thereof may follow a bent trajectory. The transverse elements 5 are further provided with lateral side faces 15 that during operation may be clamped between and arrive in friction contact with the sheaves of the drive pulley 2 and of the driven pulley 3 respectively.

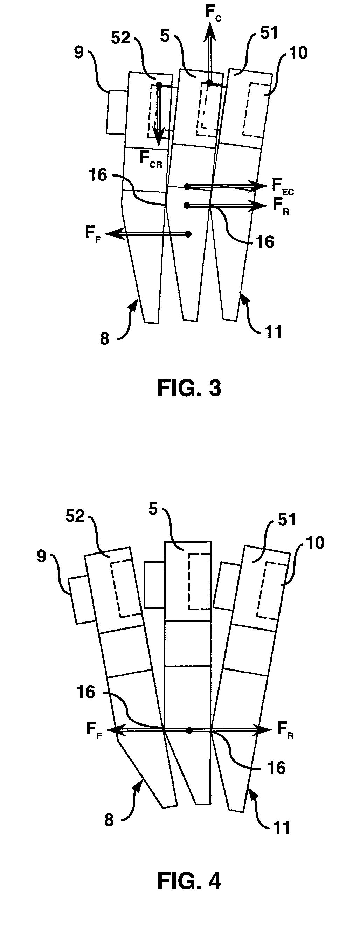

Figure 3 is side elevation view of another embodiment of an element 5 according to the known art. In this embodiment it is shown that the there may be a difference between the effective radial position of the application of the said friction force $F_F$ between the pulleys 2, 3 and the element 5 and that of a resultant force $F_R$ resulting from the pushing forces exerted through the contact lines 16 between an in between element 5 and the preceding element 51 and between the element 5 and the succeeding element 52, such that a force moment on the element may exist, providing the in between element 5 with a inadvertent tendency to tilt. Force $F_C$ and $F_{CR}$ countering that force moment will then be realised between the notch 9 of the preceding element 51 and the hole 10 of the in between element 5 and between the notch 9 of the in between element 5 and the hole of the succeeding element 52, unfavourably and additionally loading the elements 5, 51 and 52. According to the invention, in a more accurate approach also a friction force $F_{EC}$ between the endless carrier 6 and the element 5 is taken into account when determining the said force moment.

Figure 4 is a side elevation view of an element 5 according to the invention. In this embodiment the rocking edge 12 is relatively sharp and is in radial direction located near an effective radial position of the application of the said friction force $F_F$ between the pulleys 2 and 3 and the element 5 essentially at the half way point of the side face 15. When a friction force $F_{EC}$ between the endless carrier 6 and the element 5 is taken into account, the rocking edge 12 is to be located near an effective radial position of the combined friction forces of $F_F$ and $F_{EC}$.

In the construction according to the invention it is shown that although still present the protruding height $H_N$ of the notch 9 is such that there is no overlap with the hole 10 in the bent trajectory part of the belt 4 having a running radius of $R_{MIN}$. This is, according to the invention allowed, since the above-discussed function thereof is not required. In this manner not only the design freedom of the element 5 is improved, but also the load on the notch 9 and the hole 10 is reduced preventing excessive wear and possibly even element failure.

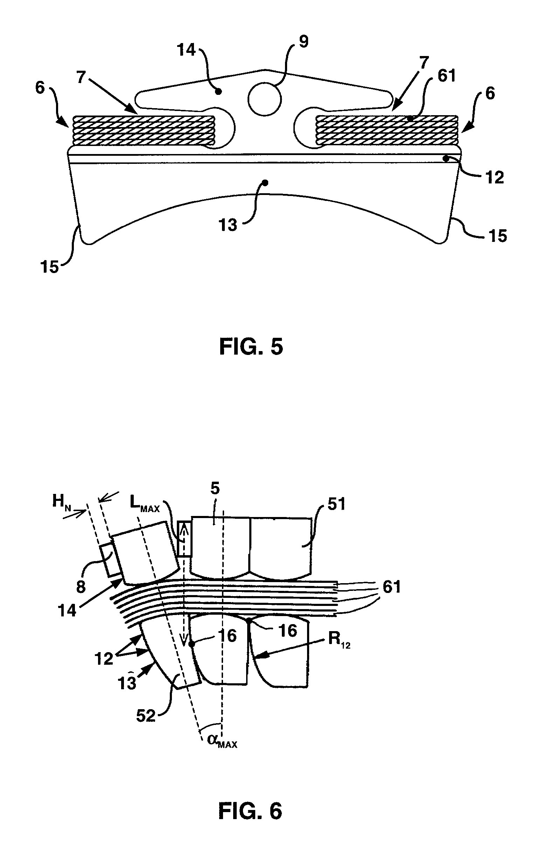

In figure 5 a front view of element 5 embodiment favourably taking advantage of the design freedom that arises from a smaller notch height $H_N$ is provided. It is apparent that dimensions of the upper part of the element 5 may be significantly reduced with regard to the known art as illustrated by figure 2. Such reduction has the advantages of a smaller element weight and a more favourably located mass centre point of the element 5.

Figure 6 is a side elevation view of another embodiment of the element 5 according to the invention. In this embodiment the rocking edge 12 has a large radius of curvature $R_{12}$ such that the radial location of the contact line 16 considerably depends on the tilting angle $\alpha$ between two contacting elements 5, 51; 5, 52 as is illustrated. The radius $R_{12}$ of the rocking edge 12 has been dimensioned such that in a straight trajectory part of the belt 4, where contacting elements 5, 51 are mutually aligned in parallel, the contact line 16 is located near the carrier 7, whereas in a trajectory part of the belt 4 that is the most tightly bent and the contacting elements 5, 52 are mutually aligned at the largest angle possible, i.e. $\alpha_{MAX}$, the contact line 16 is located near the effective radial position of the application of the said friction force $F_R$. Again it is shown that although still present the protruding height $H_N$ of the notch 9 is such that there is no overlap with the hole 10, at least in such most tightly bent trajectory part of the belt 4.

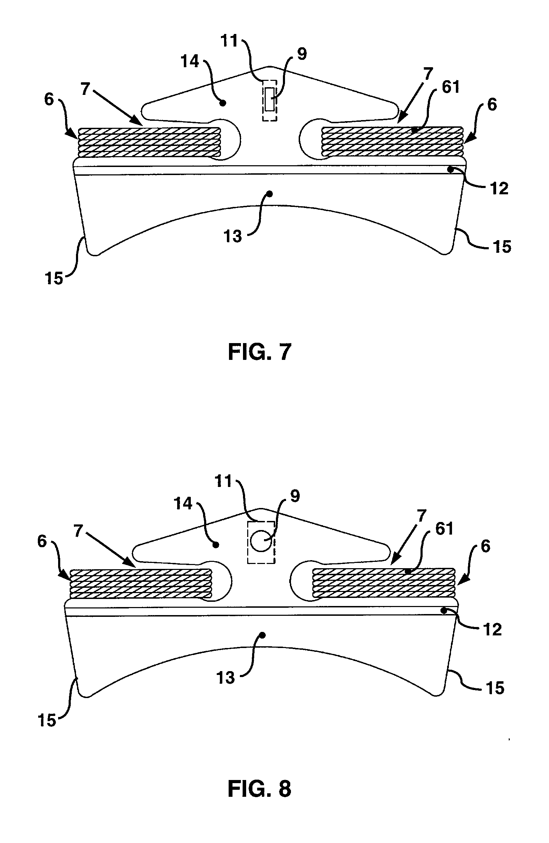

In each of the figures 7 and 8 two embodiments of the notch 9 and the hole 10 associated therewith according to the invention are depicted when viewed parallel to the longitudinal direction LD of the belt. These embodiments have the feature that the design of the combination of the notch 9 and the hole 10 is optimised for its function in the straight trajectory in between the pulleys. In figure 7 the notch 9 and the hole 10 have an essentially rectangular cross section, allowing mutual radial movement of two contacting elements 5, whereas mutual lateral movement as well as mutual rotation about the longitudinal direction LD of the belt 4 are still restricted, at least when the notch is inserted in the hole 10. Such a rectangular notch 9 and hole 10 only require a small lateral building space as can be seen in figure 7. Accordingly, they may be located radially inward more easily and can for instance be positioned at the radial level of the carrier 6. Allowing the radially outer part 14 of the element 5 to be designed advantageously small. Alternatively, as indicated in figure 8, the notch 9 may have a more or less rounded shape such that the said mutual rotation of the elements 5 is allowed, whereas the said lateral movement still is confined.

**Claims**

1. A transmission belt (4) for a continuously variable transmission (1), comprising transverse elements (5) and an endless carrier (6), the elements (5) being arranged freely slidable along said carrier (6) and comprising a tapered radially inner element part (13), a radially outer element part (14) having a front principle face (8) with a notch-like protrusion (9) provided thereon and having a back principle face (11) with a hole-like recess (10) provided therein, and a rocking edge (12) forming a transition between the said principle faces (8 and 11), such that adjacent elements (5, 51; 5, 52) may mutually rotate about a contract line (16) on the rocking edge (12), **characterised in that** at least in a belt part that is the most tightly bent in a longitudinal direction (LD) of the belt (4) the protrusion has a protruding height $(H_N)$ that is notionally smaller than a longitudinal separation between the front principle face (8) of a succeeding element (5; 51) and the back principle face (11) of a preceding element (5, 52) at the position of the notch (9).

2. The transmission belt (4) according to claim 1, **characterised in that**, the protruding height $(H_N)$ of the protrusion (9) satisfies the equation:

$$H_N < L_{MAX} \cdot \tan(\alpha_{MAX})$$

wherein:

$L_{MAX}$ is a distance between the contract line (16) and the protrusion (9), at least in a belt part that is the most tightly bent in a longitudinal direction (LD) of the belt (4), and; $\alpha_{MAX}$ is an angle at which the adjacent elements (5, 51; 5, 52) are oriented, at least in a belt part that is bent in a longitudinal direction (LD) of the belt (4) at a radius of curvature conforming to a smallest value of a belt's running radius $(R_{MIN})$ when applied in the transmission (1)

3. The transmission belt (4) according to claim 2, **characterised in that**, the protruding height $(H_N)$ of the protrusion (9) satisfies the equation:

$$H_N < L_{MAX} \cdot \tan(\alpha_{MIN})$$

wherein:

$L_{MAX}$ is a distance between the contract line (16) and the protrusion (9), at least in a belt part that is the most tightly bent in a longitudinal direction (LD) of the belt (4), and; $\alpha_{MIN}$ is an angle at which the adjacent elements (5, 51; 5, 52) are oriented, at least in a belt part that is bent in a longitudinal direction (LD) of the belt (4) at a radius of curvature conforming to a largest value of a belt's running radius $(R_{MAX})$ when applied in the transmission (1)

4. The transmission belt (4) according to claim 2, **characterised in that**, the belt (3) is provided with means for aligning adjacent elements (5, 51; 5, 52) in a straight trajectory part of the belt (3) when applied in the transmission (1) and **in that** front principle face (8) of the radially outer element part (14) is flat.

5. The transmission belt (4) according to any one of the preceding claims, **characterised in that**, the hole-like recess (10) is provided with a substantially rectangular longitudinal cross section.

6. The transmission belt (4) according to any one of the preceding claims, **characterised in that**, the notch-like protrusion (9) is provided with a substantially rectangular longitudinal cross section.

7. The transmission belt (4) according to any one of the preceding claims, **characterised in that**, a radial position rocking edge (12) conforms to a position falling in the range from half a radial dimension of a side face (15) of the elements (5, 51, 52) for contacting a pulley (1; 2) of the transmission (1) to three quarters thereof.

8. The transmission belt (4) according to any one of the preceding claims, **characterised in that**, the rocking edge (12) shows a radially oriented continuous curvature having a large radius $(R_{12})$, preferably in the range from 20 mm to 120 mm.

9. The transmission belt (4) according to any one of the preceding claims, **characterised in that**, the said radius $(R_{12})$ has a value in the range from 35 mm to 70 mm, preferably 40 mm.

10. The transmission belt (4) according to claim 8 or 9, **characterised in that**, the curvature of the rocking edge is substantially ellipsoidal.

**FIG. 1**

**FIG. 2**

FIG. 3

FIG. 4

**FIG. 5**

**FIG. 6**

**FIG. 7**

**FIG. 8**

**European Patent Office**

## EUROPEAN SEARCH REPORT

Application Number

EP 00 20 4819

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | JP 2000 179626 A (NISSAN MOTOR CO LTD) 27 June 2000 (2000-06-27) | 1 | F16G5/16 |
| A | * figures 1-13 * | 2-10 | |
| X | JP 11 108122 A (NISSAN MOTOR CO LTD) 20 April 1999 (1999-04-20) | 1 | |
| A | * figures 1-7 * | 2-10 | |
| X | JP 10 169720 A (NISSAN MOTOR CO LTD) 26 June 1998 (1998-06-26) | 1 | |
| A | * figures 2-4,6,7,10,12 * | 2-10 | |
| X | JP 10 331920 A (FUJI HEAVY IND LTD) 15 December 1998 (1998-12-15) | 1 | |
| A | * figures 4,8 * | 2-10 | |
| X | DE 29 03 439 A (VOLVO CAR BV) 2 August 1979 (1979-08-02) * page 7, paragraph 3 - page 11 * | 2-10 | |
| A | US 6 074 317 A (KOBAYASHI DAISUKE) 13 June 2000 (2000-06-13) * column 3, line 46 - column 15, line 44 * | 1-10 | TECHNICAL FIELDS SEARCHED (Int.Cl.7) F16G |

The present search report has been drawn up for all claims

| Place of search | Date of completion of the search | Examiner |
|---|---|---|
| MUNICH | 23 May 2001 | Staengl, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 221 563 A1**

## ANNEX TO THE EUROPEAN SEARCH REPORT
## ON EUROPEAN PATENT APPLICATION NO.

EP 00 20 4819

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2001

| Patent document cited in search report | | Publication date | Patent family member(s) | | Publication date |
|---|---|---|---|---|---|
| JP 2000179626 A | | 27-06-2000 | NONE | | |
| JP 11108122 | A | 20-04-1999 | NONE | | |
| JP 10169720 | A | 26-06-1998 | NONE | | |
| JP 10331920 | A | 15-12-1998 | NONE | | |
| DE 2903439 | A | 02-08-1979 | NL | 7801101 A | 02-08-1979 |
| | | | FR | 2416091 A | 31-08-1979 |
| | | | GB | 2013116 A,B | 08-08-1979 |
| | | | IT | 1113291 B | 20-01-1986 |
| | | | JP | 1304149 C | 28-02-1986 |
| | | | JP | 54119193 A | 14-09-1979 |
| | | | JP | 60028630 B | 05-07-1985 |
| | | | SE | 444052 B | 17-03-1986 |
| | | | SE | 7900747 A | 01-08-1979 |
| | | | US | 4281483 A | 04-08-1981 |
| US 6074317 | A | 13-06-2000 | JP | 3136999 B | 19-02-2001 |
| | | | JP | 10047438 A | 20-02-1998 |
| | | | CN | 1198203 A | 04-11-1998 |
| | | | EP | 0853737 A | 22-07-1998 |
| | | | WO | 9804847 A | 05-02-1998 |

EPO FORM P0459